# EUROPÄISCHE PATENTSCHRIFT

(11) **EP 1 183 167 B1**
(45) Veröffentlichungstag und Bekanntmachung des Hinweises auf die Patenterteilung: **13.07.2005**
(21) Anmeldenummer: 00942010.0
(22) Anmeldetag: 02.06.2000
(51) Int. Cl.: B60R 16/02

(54) **VORRICHTUNG ZUM ÜBERTRAGEN VON ENERGIE**
DEVICE FOR TRANSMITTING ENERGY
DISPOSITIF DE TRANSMISSION D'ENERGIE

(30) Priorität: 09.06.1999 DE 19926278
(43) Veröffentlichungstag der Anmeldung: 06.03.2002
(73) Patentinhaber: Leopold Kostal GmbH & Co. KG, 58507 Lüdenscheid (DE)
(72) Erfinder: BUNSELMEIER, Dirk, D-58507 Lüdenscheid (DE); FRENZEL, Maik, D-58511 Lüdenscheid (DE)
(86) Internationale Anmeldenummer: PCT/EP2000/005054
(87) Internationale Veröffentlichungsnummer: WO 2000/076811

(56) Entgegenhaltungen:
- EP-A- 0 860 330
- DE-A- 4 329 820
- DE-A- 4 446 901
- US-A- 5 655 919
- US-A- 5 752 844

## Beschreibung

Die Erfindung geht von einer gemäß dem Oberbegriff des Hauptanspruches konzipierten Vorrichtung zum Übertragen von Energie aus.

Derartige Vorrichtungen sind z.B. dafür vorgesehen, um in Kraftfahrzeugen Strom und/oder Licht zwischen drehbeweglich im Lenkrad gehaltenen und ortsfest im Bereich der Lenksäule angeordneten Anschlußstellen sicher übertragen zu können. Über die Anschlußstellen einer solchen Vorrichtung kann z.B. ein Airbagsystem, eine Lenkradheizung, eine Schalteinrichtung usw. mit der bzw. mit den zu seiner Funktion notwendigen Spannung und Signalen versorgt werden.

Durch die DE 195 33 439 C1 ist eine solche Vorrichtung bekanntgeworden, bei der mehrere flexible Leitungen innerhalb eines ringförmigen Hohlraumes eines Gehäuses aufgenommen sind. Das jeweils eine Ende der flexiblen Leitungen ist am Statorteil und das jeweils andere Ende der flexiblen Leitungen an einem gegenüber dem Statorteil verdrehbaren Rotorteil des Gehäuses festgelegt. Die flexiblen Leitungen sind jeweils mit ihren beiden Breitseiten über jeweils einen U-förmigen Wendeabschnitt mit zumindest einer Windung auf die axial ausgerichtete Innenwandung und beabstandet dazu, umgekehrt mit zumindest einer weiteren Windung auf die axial ausgenchtete Außenwandung des Gehäuses aufwickelbar. Die beiden Schmalseiten der flexiblen Leitungen sind jeweils zwischen der radial ausgerichteten Bodenwandung und der radial ausgerichteten Deckelwandung des Gehäuses gehalten. Durch eine solche Ausbildung ergeben sich bei Drehung des Rotorteiles jedoch zwangsläufig Relativbewegungen zwischen den flexiblen Leitungen und dem Gehäuse. Dies ist der Fall, weil die sowohl der Innenwandung als auch der Außenwandung zugeordneten Windungen der flexiblen Leitungen teilweise an Bereiche des Rotorteiles und teilweise an Bereiche des Statorteiles zur Anlage kommen. Solche Relativbewegungen zwischen den flexiblen Leitungen und dem Gehäuse verursachen wiederum zwangsläufig störende Geräusche, die aus Komfortgründen oftmals nicht tolerabel sind.

Eine dem Oberbegriff des Hauptanspruchs entsprechende Vorrichtung ist durch die US 5 655 919 A bekannt geworden. Bei dieser mehrteilig aus Stator-Ober- und Unterteil sowie aus einem Rotorunterteil aufgebauten Vorrichtung wird das dort bestehende Geräuschproblem dadurch verringert, daß im Bereich des U-förmigen Wendeabschnitts der flexiblen Leitung eine Ausnehmung in dem die Bodenwandung des Wickelraumes bildenden Leitungsträger vorgesehen ist. Dabei muß jedoch zwischen Statoroberteil und Rotorunterteil ein relativ großer Abstand eingehalten werden, was wiederum die sichere Führung der Leitung erschwert.

Der vorliegenden Erfindung liegt deshalb die Aufgabe zugrunde, eine Vorrichtung zum Übertragen von Energie zu schaffen, bei der bei einfachem Aufbau die Relativbewegungen mit berührender Anlage zwischen der zumindest einen im ringförmigen Hohlraum aufgenommenen flexiblen Leitung und dem Gehäuse auf ein Minimum reduziert ist und dadurch im Betrieb eine Geräuschminderung eintritt.

Erfindungsgemäß wird die Aufgabe bei einer vorbekannten Vorrichtung der eingangs erwähnten Art durch die im kennzeichnenden Teil des Hauptanspruches angegebenen Merkmale gelöst.

Vorteilhaft bei einer derartigen Ausgestaltung ist, daß die der Innenwandung zugeordneten Windungen der zumindest einen flexiblen Leitung lediglich an der Rotorbaueinheit und die der Außenwandung zugeordneten Windungen der zumindest einen flexiblen Leitung lediglich an der Statorbaueinheit zur Anlage kommen. Somit arbeitet die Vorrichtung ohne daß störende Geräusche verursacht werden.

Weitere vorteilhafte Ausgestaltungen des erfindungsgemäßen Gegenstandes sind in den Unteransprüchen angegeben und werden anhand eines in den Zeichnungen dargestellten Ausführungsbeispieles näher erläutert. Dabei zeigen
- Fig. 1: eine Explosionsdarstellung einer solchen Vorrichtung ohne flexible Leitungen
- Fig. 2: vier flexible Leitungen einer solchen Vorrichtung in Explosionsdarstellung
- Fig. 3: einen Vollschnitt durch eine solche Vorrichtung
- Fig. 4: das Detail A gemäß Fig. 3 in vergrößerter Darstellung im Schnitt

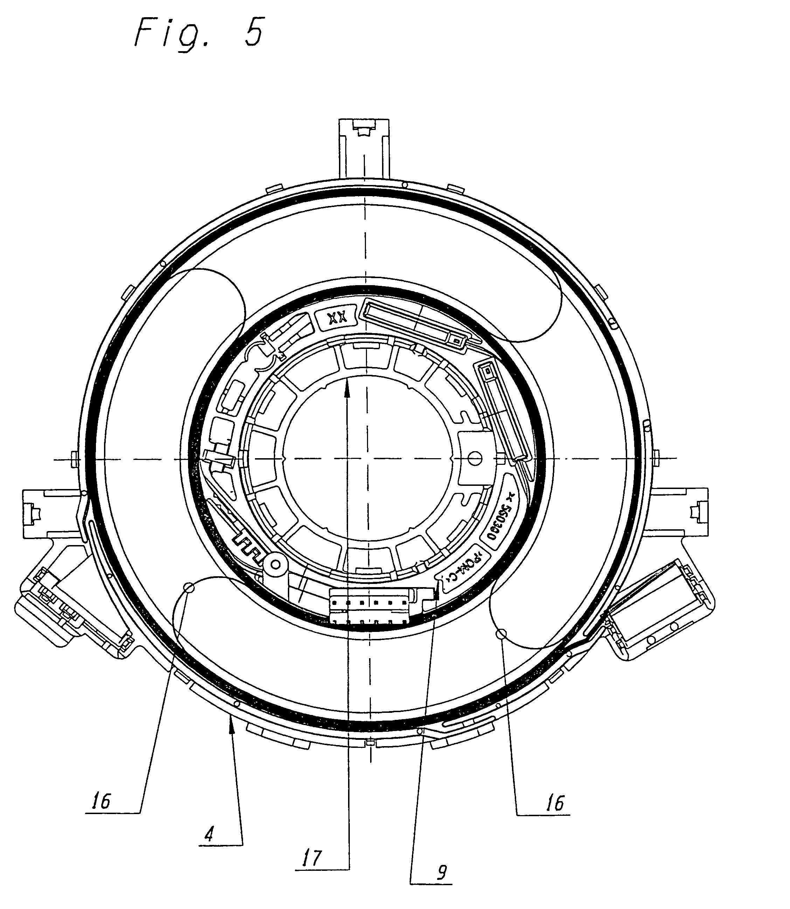

- Fig. 5: eine Draufsicht auf die Vorrichtung ohne Deckelwandung.

Wie aus den Figuren hervorgeht, besteht eine solche Vorrichtung zum Übertragen von Energie im wesentlichen aus einem eine Statorbaueinheit und eine Rotorbaueinheit aufweisenden Gehäuse und zumindest einer innerhalb eines ringförmigen Hohlraumes des Gehäuses aufgenommenen flexiblen Leitung 1.

Wie weiterhin aus den Figuren hervorgeht, sind im ringförmigen Hohlraum des Gehäuses vier flexible Leitungen 1 aufgenommen. Das Gehäuse besteht aus einem die Außenwandung 2 und einem ersten Bodenwandungsbereich 3 aufweisenden Statorunterteil 4, einem einen ersten Deckelwandungsbereich 5 aufweisenden Statoroberteil 6 und einem die Innenwandung 7 und einen zweiten Bodenwandungsbereich 8 aufweisenden Rotorunterteil 9 sowie einem einen zweiten Deckelwandungsbereich 10 aufweisenden Rotoroberteil 11. Das Statorunterteil 4 und das Statoroberteil 6 bilden die Statorbaueinheit sowie das Rotorunterteil 9 und das Rotoroberteil 11 die Rotorbaueinheit des Gehäuses.

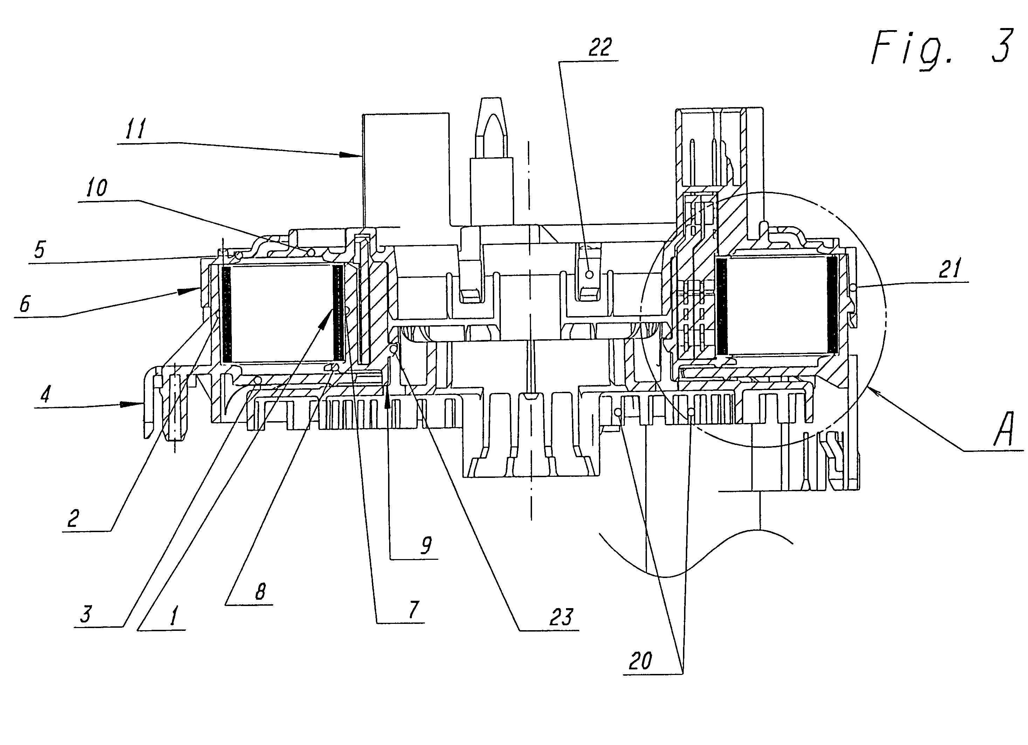

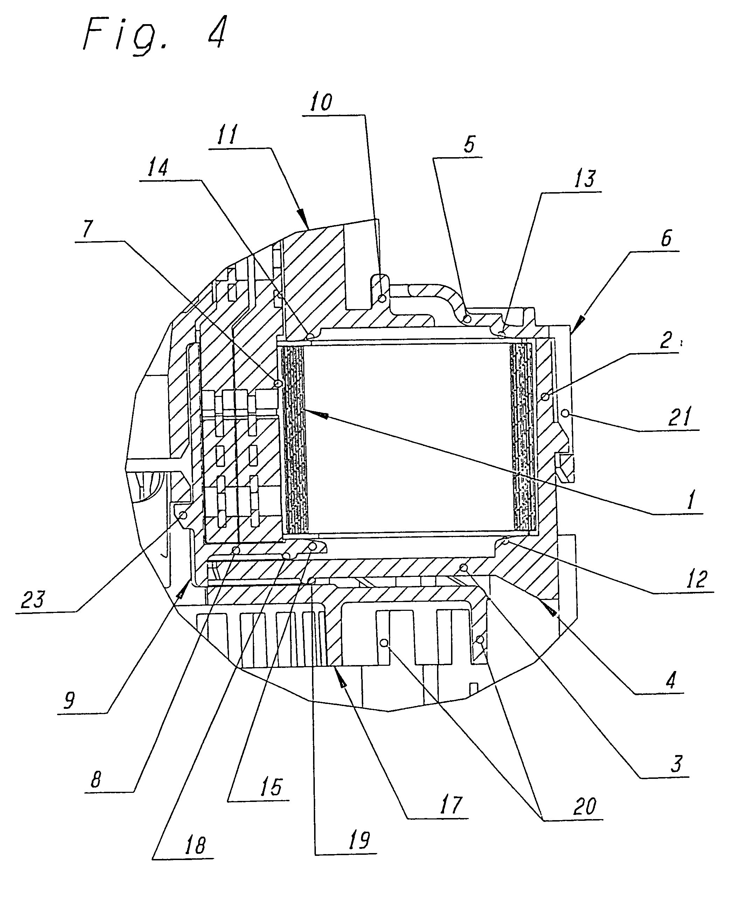

Wie insbesondere aus Fig. 3 und Fig. 4 hervorgeht, ist an den ersten Bodenwandungsbereich 3 des Statorunterteiles 4 eine ringförmig ausgebildete erste Rampe 12 angeformt. An den ersten Deckelwandungsbereich 5 des Statoroberteiles 6 ist ebenfalls eine ringförmig ausgebildete zweite Rampe 13 angeformt, die der ersten Rampe 12 mit Abstand gegenüberliegend angeordnet ist. Außerdem befindet sich einstückig eine ringförmig ausgeführte dritte Rampe 14 am zweiten Deckelwandungsbereich 10 des Rotoroberteiles 11 sowie dieser mit Abstand gegenüberliegend eine vierte Rampe 15 am zweiten Bodenwandungsbereich 8 des Rotorunterteiles 9. Die erste Rampe 12 und die zweite Rampe 13 sind direkt der Außenwandung 2 sowie die dritte Rampe 14 und die vierte Rampe 15 sind direkt der Innenwandung 7 des Gehäuses zugeordnet. Weil die erste Rampe 12 und die zweite Rampe 13 den ringförmigen Hohlraum des Gehäuses in seiner Höhe mit geringem Spiel auf das Breitenmaß der vier flexiblen Leitung 1 einengen, kommen die vier flexiblen Leitungen 1 jeweils statorseitig, also der Außenwand 2 zugeordnet, zwischen der ersten Rampe 12 und der zweiten Rampe 13 führend zur Anlage.

Desgleichen kommen die vier flexiblen Leitungen 1 jeweils mit ihren beiden Schmalseiten rotorseitig, also der Innenwandung 7 des Gehäuses zugeordnet, zwischen der dritten Rampe 14 und der vierten Rampe 15 führend zur Anlage, weil auch diese beiden Rampen 14,15 die Höhe des ringförmigen Hohlraumes des Gehäuses innenwandseitig mit geringem Spiel auf das Breitenmaß der vier flexiblen Leitungen 1 einengen. Jede der vier Rampen 12,13,14,15 weist also eine schmale, ringförmige Führungsfläche auf. Zur Berührungsminimierung sind die freien Kantenbereiche der Führungsflächen jeweils mit einer Anlaufschräge versehen.

Die der Außenwand 2 zugeordneten Windungen der vier flexiblen Leitungen 1 kommen somit ausschließlich an der Statorbaueinheit und die der Innenwandung 7 zugewandten Windungen der vier flexiblen Leitungen 1 kommen somit ausschließlich an der Rotorbaueinheit zur Anlage. Bei Drehung der Rotorbaueinheit vollführen somit die vier flexiblen Leitungen 1 lediglich im Bereich ihrer U-förmigen Wendeabschnitte 16 eine Relativbewegung in Bezug auf das Gehäuse. Besonders vorteilhaft ist dabei, daß die Schmalseiten der U-förmigen Wendeabschnitte 16 lediglich mit ihren Übergangsabschnitten im Bereich der schmalen, ringförmig ausgeführten Führungsflächen der vier Rampen 12,13,14,15 berührend zur Anlage kommen. Im gesamten Bereich der bogenförmigen Mittelabschnitte der U-förmigen Wendeabschnitte 16 findet keinerlei Berührung zwischen den flexiblen Leitungen 1 und dem Gehäuse statt. Die Entstehung von störenden Geräuschen ist somit wirkungsvoll verhindert ist.

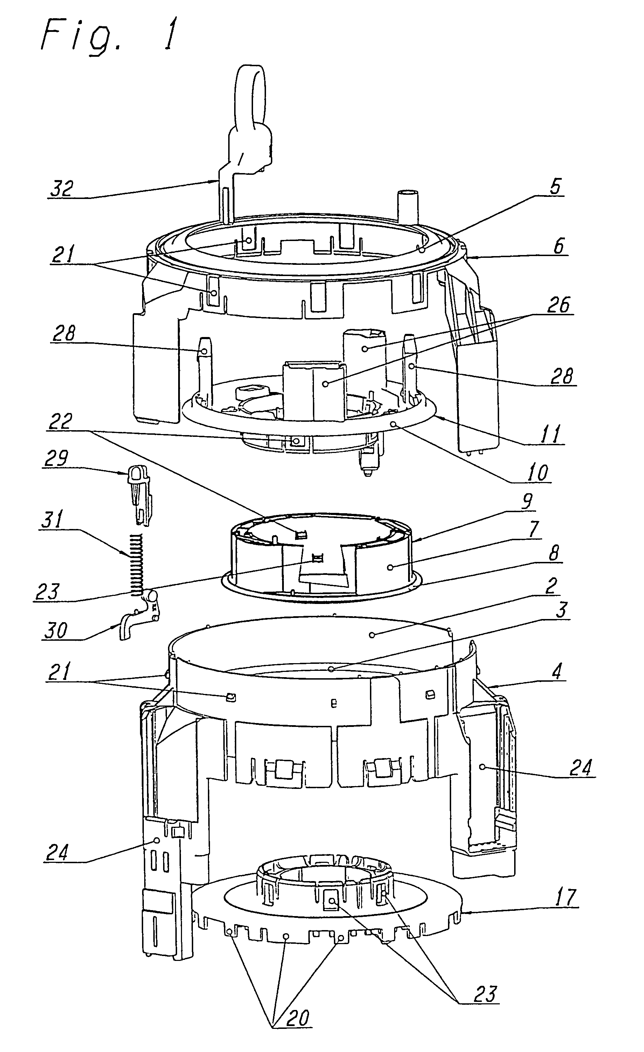

Wie insbesondere aus Fig. 1, Fig. 3 und Fig. 4 hervorgeht, ist der Deckelwandung des Gehäuses gegenüberliegend ein Führungsring 17 am Rotorunterteil 9 festgelegt. Damit ist der erste Bodenwandungsbereich 3 des Statorunterteiles 4 zwischen der Unterseite des Rotorunterteiles 9 und der der Deckelwandung zugewandten Hauptfläche des Führungsringes 17 aufgenommen. Das Rotorunterteil 9 ist somit exakt am Statorunterteil 4 gelagert. Zur Realisierung einer definierten Lagerfläche ist zum einen an die der Deckelwandung abgewandte Fußfläche des Rotorunterteiles 9 ein am ersten Bodenwandungsbereich 3 zur Anlage kommende erster Lagerwulst 18 angeformt. Zum anderen ist an die der Deckelwandung abgewandten Fläche des ersten Bodenwandungsbereiches 3 ein an der Kopffläche des Führungsringes 17 zur Anlage kommender zweiter Lagerwulst 19 angeformt. Sowohl der erste Lagerwulst 18, als auch der zweite Lagerwulst 19 sind zur Bildung einer stabilen Lagerung ausgeführt. Somit ist eine Gleitlagerung realisiert, die zur Vermeidung von störenden Geräuschen gute Voraussetzungen bietet, weil die bei einer solchen Lagerung zwangsläufig auftretende Reibung auf ein Minimum reduziert ist. Die der Deckelwandung abgewandte Unterseite des Führungsringes 17 weist einstückig eine Blendenanordnung 20 auf, welche Funktionsteil eines nicht näher dargestellten, optoelektronisch arbeitenden Lenkwinkelsensors ist. Um eine besonders stabile Lagerung der Rotorbaueinheit an dem der Einfachheit halber nicht dargestellten Mantelrohr der Lenksäule zu realisieren, kann am Führungsring 17 ein der Einfachheit halber nicht näher dargestelltes Wälzlager festgelegt sein.

Beim vorliegenden Ausführungsbeispiel wird die Rotorbaueinheit zum Zwecke ihrer Drehmitnahme formschlüssig mit dem Lenkrad gekoppelt und wird die Statorbaueinheit zum Zwecke ihrer sicheren Befestigung an einem der Lenksäule ortsfest zugeordneten weiteren Bauteil festgelegt. Die Befestigung kann dabei über miteinander in Wirkverbindung kommende Clipselemente oder aber alternativ über eine Verschraubung erfolgen. Alternativ kann die Statorbaueinheit aber auch direkt am Mantelrohr der Lenksäule festgelegt werden.

Wie desweiteren insbesondere der Fig. 1, der Fig. 3 und der Fig. 4 zu entnehmen ist, wird das Statoroberteil 6 über erste Clipsverbindungen 21 am Statorunterteil 4 festgelegt. Durch die Wirkverbindung der Clipsverbindungen 21 wird die Statorbaueinheit gebildet. Das Rotoroberteil 11 und das Rotorunterteil 9 sind über zweite Clipsverbindungen 22 aneinander festlegbar, so daß bei Wirkverbindung derselben die Rotorbaueinheit gebildet ist. Über dritte Clipsverbindungen 23 wird desweiteren der Führungsring 17 am Rotorunterteil 9 festgelegt. Die Clipsverbindungen 21,22,23 bestehen dabei jeweils aus mehreren Clipsnasen, welche formschlüssig in entsprechend ausgebildete Clipsausnehmungen bzw. Clipsfenster eingreifen.

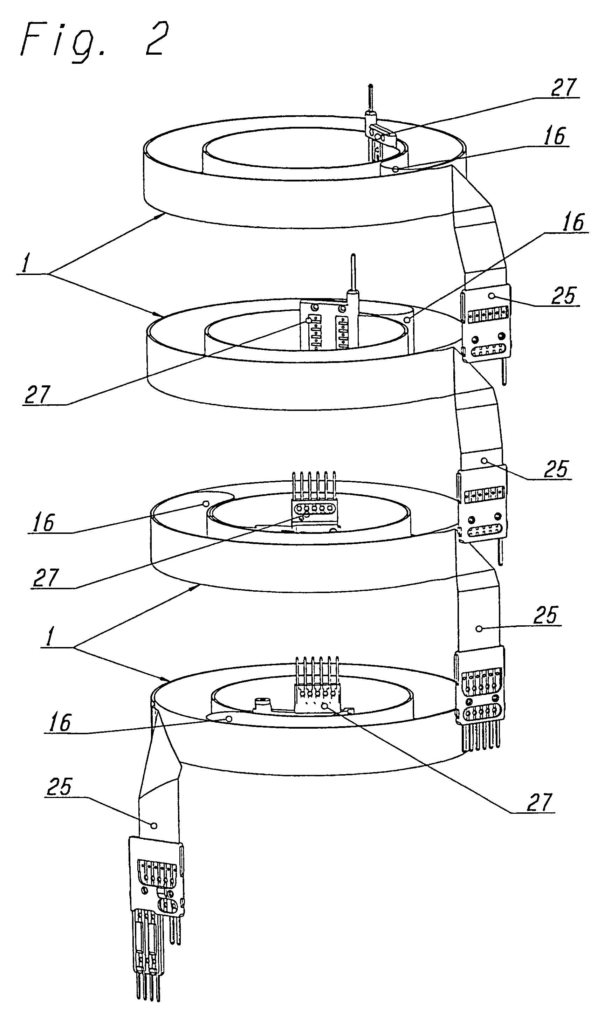

Wie insbesondere aus Fig. 1, Fig. 2 und Fig. 3 hervorgeht, sind am Statorunterteil 4 zwei erste Steckkupplungsbereiche 24 zur Festlegung der jeweils einen Enden 25 der vier flexiblen Leitungen 1 vorhanden. Am Rotoroberteil 11 sind zwei zweite Steckkupplungsbereiche 26 vorhanden, die zur Festlegung der jeweils anderen Enden 27 der vier flexiblen Leitungen 1 vorgesehen sind. Ein erster Steckkupplungsbereich 24 und ein zweiter Steckkupplungsbereich 26 ist dabei jeweils zur Festlegung von zwei einen Enden 25 bzw. zwei anderen Enden 27 der vier flexiblen Leitungen 1 vorgesehen.

Wie insbesondere aus Fig. 1 hervorgeht, sind zur Wirkverbindung bzw. Drehmitnahme mit dem - der Einfachheit halber nicht dargestellten - Lenkrad zwei Mitnahmezapfen 28 an das Rotoroberteil 11 angeformt. Die beiden Mitnahmezapfen 28 kommen formschlüssig in entsprechende Ausnehmungen des Lenkrades in Eingriff, wird dieses auf die Lenkspindel montiert. Zur Positionssicherung der Rotorbaueinheit in ihrer definierten Montageposition (vor der Montage des Lenkrades) ist eine mittels Stößels 29 zu betätigende Sperrwippe 30 vorhanden, welche von einer Schraubendruckfeder 31 beaufschlagt wird. Erst während der Montage des Lenkrades wird die Sperrwirkung der Sperrwippe 30 automatisch aufgehoben, weil ein am Lenkrad vorhandenes Wirkelement über den Stößel 29 auf die Sperrwippe 30 einwirkt. Bei Demontage des Lenkrades wird aufgrund der Schraubendruckfeder 31 automatisch die Sperrlage der Sperrwippe 30 wieder hergestellt.

Um bis zum Einbau der Vorrichtung die dazu unbedingt notwendige Mittenstellung zu gewährleisten, ist am Rotoroberteil 11 ein Sicherungsglied 32 festgelegt. Das Sicherungsglied 32 kann nur durch mechanische Zerstörung wieder vom Rotoroberteil 11 entfernt werden. Dazu weist das Sicherungsglied 32 eine Sollbruchstelle derart auf, daß ein kleiner definierter Teil des Sicherungsgliedes 32 am Rotoroberteil 11 verbleibt. Das Sicherungsglied 32 ist so angebracht, daß die zur Betätigung des Stößels 29 notwendige Öffnung vollkommen abgedeckt ist, so daß dieser bzw. die Sperrwippe 30 nicht betätigt werden kann. Das hat zur Folge, daß die Sperrlage der Sperrwippe 30 bis zum Abbrechen des Sicherungsgliedes 32 mit Sicherheit erhalten bleibt. Befindet sich das Sicherungsglied 32 vor der Montage des Lenkrades noch gänzlich am Rotoroberteil 11, kann davon ausgegangen werden, daß sich die Vorrichtung in der Mittenstellung befindet und die Betriebssicherheit der Vorrichtung gewährleistet ist. Das Fehlen des Sicherungsgliedes 32 ist hingegen ein deutliches Anzeichen dafür, daß die Mittenstellung, also die Betriebssicherheit der Vorrichtung nicht gewährleistet ist.

## Patentansprüche

1. Vorrichtung zum Übertragen von Energie zwischen zwei Endstellen, mit zumindest einer mehrere Leiter aufweisenden flexiblen Leitung (1), welche in Windungen innerhalb eines ringförmigen Hohlraumes eines seine Längsachse konzentrisch umgebenden Gehäuses aufgenommen ist, wobei das eine Ende der flexiblen Leitung an einem Stator (4,6) und das andere Ende der Leitung an einem gegenüber dem Statorteil um die Längsachse verdrehbaren Rotor (9,11) des Gehäuses festgelegt ist, wobei die flexible Leitung mit ihren beiden Breitseiten über einen U-förmigen Wendeabschnitt (16) mit zumindest einer Windung auf die axial ausgerichtete Innenwandung (7) und beabstandet dazu, umgekehrt mit zumindest einer weiteren Windung auf die ebenfalls axial ausgerichtete Außenwandung (2) des Gehäuses aufwickelbar ist und mit ihren beiden Schmalseiten zwischen der radial ausgerichteten Bodenwandung und der radial ausgerichteten Deckelwandung des Gehäuses gehalten ist und wobei der Stator (4,6) aus einem die Außenwandung und einen ersten Bodenwandungsbereich (3) aufweisenden Statorunterteil (4) und einem mit einem ersten Deckelwandungsbereich (5) versehenen Statoroberteil (6) besteht und der Rotor (9,11) ein die Innenwandung (7) und einen zweiten Bodenwandungsbereich (8) besitzendes Rotorunterteil (9) aufweist, **dadurch gekennzeichnet, daß** der Rotor (9,11) ein mit einem zweiten Deckelwandungsbereich (10) versehenes Rotoroberteil (11) aufweist, und daß die Deckelwandungsbereiche (5,10) und die Bodenwandungsbereiche (3,8) so angeordnet sind, daß diese im Bereich der Anlage der flexiblen Leitung (1) an der Innenwandung (7) lediglich dem Rotor (9,11) und im Bereich der Anlage der flexiblen Leitung (1) an der Außenwandung (2) lediglich dem Stator (4,6) zugehörig sind.

2. Vorrichtung nach Anspruch 1, **dadurch gekennzeichnet, daß** der erste Bodenwandungsbereich (3) des Statorunterteiles (4) eine den Hohlraum des Gehäuses einengende ringförmig ausgebildete erste Rampe (12) aufweist.

3. Vorrichtung nach Anspruch 1 oder 2, **dadurch gekennzeichnet, daß** der erste Deckelwandungsbereich (5) des Statoroberteiles (6) eine den Hohlraum des Gehäuses einengende ringförmig ausgebildete zweite Rampe (13) aufweist.

4. Vorrichtung nach einem der Ansprüche 1 bis 3, **dadurch gekennzeichnet, daß** der zweite Deckelwandungsbereich (10) des Rotoroberteiles (11) eine den Hohlraum des Gehäuses einengende ringförmig ausgebildete dritte Rampe (14) aufweist.

5. Vorrichtung nach einem der Ansprüche 1 bis 4, **dadurch gekennzeichnet, daß** der am Rotorunterteil (9) vorhandene zweite Bodenwandungsbereich (8) als schmale, ringförmig ausgeführte, den Hohlraum des Gehäuses einengende vierte Rampe (15) ausgebildet ist.

6. Vorrichtung nach einem der Ansprüche 1 bis 5, **dadurch gekennzeichnet, daß** die zumindest eine flexible Leitung (1) mit ihren beiden Schmalseiten statorseitig zwischen der ersten Rampe (12) des Statorunterteiles (4) und der zweiten Rampe (13) des Statoroberteiles (6) führend aufgenommen ist.

7. Vorrichtung nach einem der Ansprüche 1 bis 6, **dadurch gekennzeichnet, daß** die zumindest eine flexible Leitung (1) mit ihren beiden Schmalseiten rotorseitig zwischen der dritten Rampe (14) des Rotoroberteiles (11) und der vierten Rampe (15) des Rotorunterteiles (9) führend aufgenommen ist.

8. Vorrichtung nach einem der Ansprüche 1 bis 7, **dadurch gekennzeichnet, daß** der Deckelwandung gegenüberliegend am Rotorunterteil (9) ein Führungsring (17) derart festgelegt ist, so daß der erste Bodenwandungsbereich (3) des Statorunterteiles (4) zwischen der Unterseite des Rotorunterteiles (9) und der der Deckelwandung zugewandten Hauptfläche des Führungsringes (17) aufgenommen ist.

9. Vorrichtung nach einem der Ansprüche 1 bis 8, **dadurch gekennzeichnet, daß** an die der Deckelwandung abgewandte Fußfläche des Rotorunterteiles (9) ein am ersten Bodenwandungsbereich (3) zur Anlage kommender, ringförmig ausgebildeter erster Lagerwulst (18) angeformt ist.

10. Vorrichtung nach einem der Ansprüche 1 bis 9, **dadurch gekennzeichnet, daß** an die der Deckelwandung abgewandte Fläche des ersten Bodenwandungsbereiches (3) des Statorunterteiles (4) ein an der Kopffläche des Führungsringes (17) zur Anlage kommender, ringförmig ausgebildeter zweiter Lagerwulst (19) angeformt ist.

11. Vorrichtung nach Anspruch 8 oder einem der folgenden, **dadurch gekennzeichnet, daß** an der der Deckelwandung abgewandten Fußfläche des Führungsringes (17) eine Codeeinrichtung eines Lenkwinkelsensors vorhanden ist.

12. Vorrichtung nach Anspruch 11, **dadurch gekennzeichnet, daß** die Codeeinrichtung als Blendenanordnung (20) eines optoelektronisch arbeitenden Lenkwinkelsensors ausgebildet ist.

13. Vorrichtung nach Anspruch 8 oder einem der folgenden, **dadurch gekennzeichnet, daß** der Führungsring (17) zur Aufnahme eines Wälzlagers vorgesehen ist.

14. Vorrichtung nach einem der Ansprüche 1 bis 13, **dadurch gekennzeichnet, daß** das Statoroberteil (6) und das Statorunterteil (4) über miteinander in Wirkverbindung kommende erste Clipsverbindungen (21) zu einer Statorbaueinheit zusammengesetzt sind.

15. Vorrichtung nach einem der Ansprüche 1 bis 14, **dadurch gekennzeichnet, daß** das Rotoroberteil (11) und das Rotorunterteil (9) über miteinander in Wirkverbindung kommende zweite Clipsverbindungen (22) zu einer Rotorbaueinheit zusammengesetzt sind.

16. Vorrichtung nach einem der Ansprüche 1 bis 15, **dadurch gekennzeichnet, daß** der Führungsring (17) über dritte Clipsverbindungen (23) am Rotorunterteil (9) haltend festgelegt ist.

17. Vorrichtung nach einem der Ansprüche 1 bis 16, **dadurch gekennzeichnet, daß** am Statorunterteil (4) zumindest ein erster Steckkupplungsbereich (24) zur Festlegung des einen Endes (25) zumindest einer flexiblen Leitung (1) vorhanden ist.

18. Vorrichtung nach einem der Ansprüche 1 bis 17, **dadurch gekennzeichnet, daß** am Rotoroberteil (11) zumindest ein zweiter Steckkupplungsbereich (26) zur Festlegung des anderen Endes (27) zumindest einer flexiblen Leitung (1) vorhanden ist.

19. Vorrichtung nach einem der Ansprüche 1 bis 18, **dadurch gekennzeichnet, daß** innerhalb des ringförmigen Hohlraumes des Gehäuses mehrere flexible Leitungen (1) aufgenommen sind.

20. Vorrichtung nach einem der Ansprüche 16 bis 19, **dadurch gekennzeichnet, daß** zumindest ein erster Steckkupplungsbereich (24) und ein zweiter Steckkupplungsbereich (26) zur Festlegung von mehreren einen Enden (25) bzw. mehreren anderen Enden (27) mehrerer flexibler Leitungen (1) vorgesehen ist.

## Claims

1. Device for transmitting energy between two terminals, with at least one flexible cable (1) that comprises several wires and is accommodated in turns inside a ring-shaped cavity of an enclosure that concentrically encompasses the longitudinal axis of the same, with the one end of the flexible cable fixed to a stator (4, 6) and the other end of the cable fixed to a rotor (9, 11) of the enclosure positioned opposite the stator element that can be rotated around its longitudinal axis, with the flexible cable capable of being wound with its two broad faces with at least one turn over a U-shaped reversal section (16) onto the axially aligned inside wall (7) and, at a distance to the same, capable of being wound with at least one further turn onto the likewise axially aligned outside wall (2) of the enclosure and with its two narrow sides held between the radially aligned bottom wall and the radially aligned top cover wall of the enclosure, and with the stator (4, 6) comprising a stator lower part (4) that is made up of the outside wall and a first bottom wall section (3), and a stator upper part (6) that is provided with a first top cover wall section (5), and the rotor (9, 11) being made up of a rotor lower part (9) occupying the inside wall (7) and a bottom wall section (8), **characterised by** the fact that the rotor (9, 11) comprises a rotor upper part (11) provided with a second top cover wall section (10) and that the top cover wall sections (5, 10) and the bottom wall sections (3, 8) are arranged in such a way that, in the area of laying-on the flexible cable (1) on the inside wall (7) these are only associated to the rotor (9, 11) and in the area of laying-on the flexible cable (1) to the outside wall (2) these are only associated to the stator (4, 6).

2. Device in accordance with Claim 1, **characterised by** the fact that the first bottom wall section (3) of the lower part of the stator (4) features a first ramp (12) of a ring-shaped design that narrows the cavity of the enclosure.

3. Device in accordance with Claim 1 or Claim 2, **characterised by** the fact that the first top cover wall section (5) of the upper part of the stator (6) features a second ramp (13) of a ring-shaped design that narrows the cavity of the enclosure.

4. Device in accordance with any of Claims 1 to 3, **characterised by** the fact that the second top cover wall section (10) of the upper part of the rotor (11) features a third ramp (14) of a ring-shaped design that narrows the cavity of the enclosure.

5. Device in accordance with any of Claims 1 to 4, **characterised by** the fact that the second bottom wall section (8) provided on the lower part of the rotor (9) is designed as a narrow fourth ramp (15) of a ring-shaped construction that narrows the cavity of the enclosure.

6. Device in accordance with any of Claims 1 to 5, **characterised by** the fact that the at least one flexible cable (1) is accommodated with its two narrow sides on the stator side between the first ramp (12) of the lower part of the stator (4) and the second ramp (13) of the upper part of the stator (6) in a routing manner.

7. Device in accordance with any of Claims 1 to 6, **characterised by** the fact that the at least one flexible cable (1) is accommodated with its two narrow sides on the rotor side between the third ramp (14) of the upper part of the rotor (11) and the fourth ramp (15) of the lower part of the rotor (9) in a routing manner.

8. Device in accordance with any of Claims 1 to 7, **characterised by** the fact that a guide ring (17) is fixed to the lower part of the rotor (9) opposite the top cover wall in such a way that the first bottom wall section (3) of the lower part of the stator (4) is accommodated between the underside of the lower part of the rotor (9) and the main surface of the guide ring (17) facing the top cover wall.

9. Device in accordance with any of Claims 1 to 8, **characterised by** the fact that a first bearing bead (18) of an annular design that comes to lie on the first bottom wall section (3) is moulded onto the footing of the lower part of the rotor (9) facing away from the top cover wall.

10. Device in accordance with any of Claims 1 to 9, **characterised by** the fact that a second bearing bead (19) of an annular design that comes to lie on the top end of the guide ring (17) is moulded onto the surface of the first bottom wall section (3) of the lower part of the stator (4) facing away from the top cover wall.

11. Device in accordance with Claim 8 or any of the subsequent claims, **characterised by** the fact that a code facility for a steer angle sensor is provided on the footing of the guide ring (17) facing away from the top cover wall.

12. Device in accordance with Claim 11, **characterised by** the fact that the code facility is designed as an aperture arrangement (20) of a steer angle sensor that functions opto-electronically.

13. Device in accordance with Claim 8 or any of the subsequent claims, **characterised by** the fact that the guide ring (17) is provided to hold a rolling-contact bearing.

14. Device in accordance with any of Claims 1 to 13, **characterised by** the fact that the upper part of the stator (6) and the lower part of the stator (4) are assembled to a stator unit by means of first clip connections (21) that form an interactive mechanical linkage.

15. Device in accordance with any of Claims 1 to 14, **characterised by** the fact that the upper part of the rotor (11) and the lower part of the rotor (9) are assembled to a rotor unit by means of second clip connections (22) that form an interactive mechanical linkage.

16. Device in accordance with any of Claims 1 to 15, **characterised by** the fact that the guide ring (17) is fixed to the lower part of the rotor (9) in a retaining manner by means of third clip connections (23).

17. Device in accordance with any of Claims 1 to 16, **characterised by** the fact that at least one first plug-in connector zone (24) is provided on the lower part of the stator (4) for the purpose of fixing the leading end (25) of at least one flexible cable (1).

18. Device in accordance with any of Claims 1 to 17, **characterised by** the fact that at least one second plug-in connector zone (26) is provided on the upper part of the rotor (11) for the purpose of fixing the other end (17) of at least one flexible cable (1).

19. Device in accordance with any of Claims 1 to 18, **characterised by** the fact that several flexible cables (1) are accommodated within the ring-shaped cavity of the enclosure.

20. Device in accordance with any of Claims 16 to 19, **characterised by** the fact that at least one first plug-in connector zone (24) and one second plug-in connector zone (26) are provided for the purpose of fixing several leading ends (25) or several other ends (27), respectively, of several flexible cables (1).

## Revendications

1. Dispositif pour le transfert d'énergie entre deux points terminaux , avec au moins une ligne flexible (1) présentant plusieurs conducteurs, laquelle est reçue sous forme de spires dans une cavité annulaire d'un boîtier qui entoure concentriquement son axe longitudinal, l'une des extrémités de la ligne flexible étant fixée à un stator (4, 6) et l'autre extrémité de la ligne étant fixée à un rotor (9, 11) du boîtier, qui peut pivoter autour de l'axe longitudinal par rapport au stator, la ligne flexible pouvant être enroulée, avec ses deux côtés larges, par une section de virage d'inversion (16) en forme de U, avec au moins une spire, sur la paroi inténeure (7), onentée dans le sens axial, et, à distance de ceci, inversement, avec au moins une autre spire, sur la paroi extérieure (2) du boîtier, également orientée dans le sens axial, et pouvant être maintenue, avec ses deux côtés étroits, entre la paroi du fond orientée dans le sens radial et la paroi du couvercle du boîtier, orientée dans le sens radial, et le stator (4, 6) étant composé d'une pièce de stator inférieure (4), comprenant la paroi extérieure et une première section de paroi de fond (3), et d'une pièce de stator supérieure (6), pourvue d'une première section de paroi de couvercle (5), et le rotor (9, 11) présentant une pièce de rotor inférieure (9) comprenant la paroi intérieure (7) et une deuxième section de paroi de fond (8), **caractérisé en ce que** le rotor (9, 11) présente une pièce de rotor supérieure (11) pourvue d'une deuxième section de paroi de couvercle (10), et **en ce que** les secteurs de paroi de couvercle (5, 10) et les sections de paroi de fond (3, 8) sont disposées de manière à ce qu'elles soient, dans la zone d'installation de la conduite flexible (1), sur la paroi intérieure (7), associées seulement au rotor (9, 11), et dans la zone d'installation de la conduite flexible (1), sur la paroi extérieure (2), associées seulement au stator (4, 6).

2. Dispositif selon la revendication 1, **caractérisé en ce que** la première section de paroi de fond (3) de la pièce de stator inférieure (4) présente une première rampe (12) en forme d'anneau, qui resserre l'espace libre du boîtier.

3. Dispositif selon la revendication 1 ou 2, **caractérisé en ce que** la première section de paroi de couvercle (5) de la pièce de stator supérieure (6) présente une deuxième rampe (13) en forme d'anneau, qui resserre l'espace libre du boîtier.

4. Dispositif selon l'une des revendications 1 à 3, **caractérisé en ce que** la deuxième section de paroi de couvercle (10) de la pièce de rotor supérieure (11) présente une troisième rampe (14) en forme d'anneau, qui resserre l'espace libre du boîtier

5. Dispositif selon l'une des revendications 1 à 4, **caractérisé en ce que** la deuxième section de paroi de fond (8) équipant la pièce de rotor inférieure (9) est conçue sous la forme d'une quatrième rampe (15) étroite, en forme d'anneau, qui resserre l'espace libre du boîtier.

6. Dispositif selon l'une des revendications 1 à 5, **caractérisé en ce qu'**au moins une ligne flexible (1) est reçue, guidée, par ses deux côtés étroits, côté stator, entre la première rampe (12) de la pièce de stator inférieure (4) et la deuxième rampe (13) de la pièce de stator supérieure (6).

7. Dispositif selon l'une des revendications 1 à 6, **caractérisé en ce qu'**au moins une conduite flexible (1) est reçue, guidée, par ses deux côtés étroits, côté rotor, entre la troisième rampe (14) de la pièce de rotor supérieure (11) et la quatrième rampe (15) de la pièce de rotor inférieure (9).

8. Dispositif selon l'une des revendications 1 à 7, **caractérisé en ce que,** à l'opposé de la paroi de couvercle, sur la pièce de rotor inférieure (9), une bague de guidage (17) est fixée de sorte que la première section de paroi de fond (3) de la pièce de stator inférieure (4) est reçue entre le côté inférieur de la pièce de rotor inférieure (9) et de la surface principale de la bague de guidage (17), orientée vers la paroi de couvercle.

9. Dispositif selon l'une des revendications 1 à 8, **caractérisé en ce que**, sur la face inférieure de la pièce de rotor inférieure (9), opposée à la paroi de couvercle, est formé un premier bourrelet d'appui annulaire (18) qui vient porter contre la section de paroi de fond (3).

10. Dispositif selon l'une des revendications 1 à 9, **caractérisé en ce que**, sur la surface de la première section de paroi de fond (3) de la pièce de stator inférieure (4), orientée à l'opposé de la paroi de couvercle, est formé un deuxième bourrelet d'appui annulaire (19) qui vient porter contre la face supérieure de la bague de guidage (17).

11. Dispositif selon la revendication 8 ou l'une des suivantes, **caractérisé en ce qu'**un dispositif de codage d'un capteur d'angle de direction est prévu sur la face inférieure de la bague de guidage (17), orientée à l'opposé de la paroi de couvercle.

12. Dispositif selon la revendication 11, **caractérisé en ce que** le dispositif de codage est conçu en tant qu'arrangement obturateur (20) d'un capteur d'angle de direction opto-électronique.

13. Dispositif selon la revendication 8 ou l'une des suivantes, **caractérisé en ce que** la bague de guidage (17) est prévue pour recevoir un palier à roulement.

14. Dispositif selon l'une des revendications 1 à 13, **caractérisé en ce que** la pièce de stator supérieure (6) et la pièce de stator inférieure (4) sont assemblées pour former une unité statorique, au moyen de premières liaisons par agrafage (21) coopérant entre elles.

15. Dispositif selon l'une des revendications 1 à 14, **caractérisé en ce que** la pièce de rotor supérieure (11) et la pièce de rotor inférieure (9) sont assemblées pour former une unité rotorique, au moyen de deuxièmes liaisons par agrafage (22) coopérant entre elles.

16. Dispositif selon l'une des revendications 1 à 15, **caractérisé en ce que** la bague de guidage (17) est fixée à la pièce de rotor inférieure (9) au moyen de troisièmes liaisons par agrafage (23).

17. Dispositif selon l'une des revendications 1 à 16, **caractérisé en ce qu'**à la pièce de stator inférieure (4), est prévue au moins une première section de couplage enfichable (24) pour la fixation de l'une des extrémités (25) d'au moins une ligne flexible (1).

18. Dispositif selon l'une des revendications 1 à 17, **caractérisé en ce qu'**à la pièce de rotor supérieure (11), est prévue au moins une deuxième section de couplage enfichable (26) pour la fixation de l'autre extrémité (27) d'au moins une ligne flexible (1).

19. Dispositif selon l'une des revendications 1 à 18, **caractérisé en ce que** plusieurs lignes flexibles (1) sont reçues à l'intérieur de l'espace libre, annulaire du boîtier.

20. Dispositif selon l'une des revendications 16 à 19, **caractérisé en ce qu'**au moins une première section de couplage enfichable (24) et une deuxième section de couplage enfichable (26) sont prévues pour la fixation de plusieurs extrémités (25) resp. de plusieurs autres extrémités (27) de plusieurs lignes flexibles (1).
